# EUROPEAN PATENT SPECIFICATION

(11) **EP 2 753 029 B1**
(45) Date of publication and mention of the grant of the patent: **09.11.2016**
(21) Application number: 12839685.0
(22) Date of filing: 15.08.2012
(51) Int. Cl.: H04L 12/70, H04L 12/751, H04L 12/851, H04L 12/861

(54) **MESSAGE LEARNING METHOD, DEVICE AND SYSTEM**
NACHRICHTENLERNVERFAHREN, -VORRICHTUNG UND -SYSTEM
PROCÉDÉ, DISPOSITIF ET SYSTÈME DE PRISE DE CONNAISSANCE DE MESSAGES

(30) Priority: 10.10.2011 CN 201110304851
(43) Date of publication of application: 09.07.2014
(73) Proprietor: Huawei Technologies Co., Ltd., Longgang District Shenzhen, Guangdong 518129 (CN)
(72) Inventor: LI, Yong, Shenzhen Guangdong 518129 (CN); XIE, Guoqing, Shenzhen Guangdong 518129 (CN)
(74) Representative: Pfenning, Meinig & Partner mbB
(86) International application number: PCT/CN2012/080125
(87) International publication number: WO 2013/053266

(56) References cited:
- EP-A2- 1 093 259
- CN-A- 101 043 427
- CN-A- 101 043 427
- CN-A- 101 197 787
- Hewlet Packard: "Configuring IP", Internet , 6 January 2003 (2003-01-06), XP002732763, Retrieved from the Internet: URL:http://www.hp.com/rnd/support/manuals/ pdf/release_06628_07110/Bk2_Ch6_IP.pdf [retrieved on 2014-11-20]

## Description

### FIELD OF THE INVENTION

The present invention relates to the field of communication field, and in particular, to a packet learning method, apparatus, and system.

### BACKGROUND OF THE INVENTION

In a TCP/IP network architecture, the address resolution protocol (Address Resolution Protocol, ARP) is a basic protocol under the Internet protocol version 4 (Internet Protocol version 4, IPV4). The ARP obtains a corresponding physical address by using an IP address. In the TCP/IP network architecture, each host is allocated a 32-bit IP address. The IP address is a logical address for identifying a host. However, before a packet can be transmitted on a physical network, a physical address of a destination host must be known. Therefore, there is a problem about how to translate an IP address into a physical address. Taking the Ethernet protocol as an example, as specified in the Ethernet protocol, if a host wants to communicate with another host in a same local area network, a media access control (Media Access Control, MAC) address of the destination host must be known. The 32-bit IP address of the destination host must be translated into a 48-bit Ethernet address so that a packet can be transmitted to the destination host correctly. This requires a suite of services at an interconnection layer to translate the IP address into a corresponding physical address, and the suite of protocols is the ARP protocol.

In an IPV6 environment, the ARP protocol is extended into a neighbor discovery protocol for IPV6. The IPV6 neighbor discovery protocol, based on the RFC2461, is carried over an Internet control message protocol version 6 (Internet Control Message Protocol Version 6, ICMPV6) message, is independent of a specific link layer and used to dynamically maintain state information of other neighboring nodes on a link, including an IP address, a link address, an address validity period, a default gateway on the link, and other neighbor information, implements functions of ARP of IPV4, ICMP router discovery, and ICMP redirection, and adds support for automatic configuration and mobility.

The IPV6 neighbor discovery protocol includes the following functions: router discovery, prefix discovery, parameter discovery, address automatic configuration, address resolution, next-hop selection, neighbor unreachability detection, duplicate address detection, and redirection. Similar to the ARP function in the IPV4, the IPV6 address resolution function is implemented by a neighbor solicitation and neighbor advertisement mechanism. When a host needs to obtain a link-local address of another host on the same link, the host sends a neighbor solicitation packet. The packet is similar to an ARP request packet in the IPv4, but uses a multicast address instead of a broadcast address. Only a node whose last 24 bits of the requested host are the same as the multicast address can receive the packet, thereby reducing the possibility of a broadcast storm.

A source host uses the last 24 bits of an IPv6 address of a destination host node to form a corresponding multicast address, and then sends an ICMPv6 packet of the type 135 on the link. After the destination host receives the neighbor solicitation packet, the destination host node responds to the packet by sending an ICMPv6 packet of the type 136 on the local link. After receiving a neighbor advertisement packet, the source host may communicate with the destination host. When a link layer address of a host on the local link changes, the host also actively sends a neighbor advertisement packet.

After the physical address of the destination host is obtained, the physical address of the destination host needs to be stored in a local cache table. In the IPV4, it is an ARP cache table, and in the IPV6, it is a neighbor cache table. The internet document XP0023732763 titled "Configuring IP" published by Hewlett Packard as part of the documentation of a Hewlett Packard routing switch discusses ARP cache tables. CN 101043427A discusses a congestion management method comprising buffering of messages. However, in the actual process, it is possible that resources of the ARP cache table are insufficient or that resources of the neighbor cache table are insufficient, thereby causing a communication failure.

### SUMMARY OF THE INVENTION

An embodiment of the present invention provides a packet learning method, including:
receiving a packet, where the packet carries an IP address and a media access control address of a destination host in a network;
identifying a priority of the packet according one or more of: information about a port receiving the packet, information about a virtual local area network carried in the packet, the media access control address carried in the packet, and identifier information of a local stream carrying the packet; and
judging whether a cache table has storage space; and if so, recording the IP address of the destination host, the media access control address of the destination host, and the priority of the packet into the cache table; or if not, comparing the priority of the packet with a lowest priority in the cache table, and if the priority of the packet is higher than the lowest priority in the cache table, recording the IP address of the destination host, the media access control address of the destination host, and the priority of the packet into a position corresponding to the lowest priority in the cache table.

An embodiment of the present invention provides a network device, including:
a receiving port, configured to receive a packet, where the packet carries an IP address and a media access control address of a destination host in a network; and
a processing unit, configured to: identify a priority of the packet according one or more of: information about a port receiving the packet, information about a virtual local area network carried in the packet, the media access control address carried in the packet, and
identifier information of a local stream carrying the packet; judge whether a cache table has storage space; and if so, record the IP address of the destination host, the media access control address of the destination host, and the priority of the packet into the cache table; or if not, compare the priority of the packet with a lowest priority in the cache table, and if the priority of the packet is higher than the lowest priority in the cache table, record the IP address of the destination host, the media access control address of the destination host, and the priority of the packet into a position corresponding to the lowest priority in the cache table.

An embodiment of the present invention provides a packet learning system, including a first host and a second host, where
the first host is configured to: receive a packet from the second host, where the packet carries an IP address and a media access control address of the second host, and identify a priority of the packet according one or more of: information about a port receiving the packet, information about a virtual local area network carried in the packet, the media access control address carried in the packet, and identifier information of a local stream carrying the packet; judge whether a cache table has storage space; and if so, record the IP address of the second host, the media access control address of the second host, and the priority of the packet into the cache table; or if not, compare the priority of the packet with a lowest priority in the cache table, and if the priority of the packet is higher than the lowest priority in the cache table, record the IP address of the second host, the media access control address of the second host, and the priority of the packet into a position corresponding to the lowest priority in the cache table.

The method, apparatus, and system provided by the embodiments of the present invention are capable of identifying the priority of the response packet of the destination host, thereby learning the packet according to the priority, ensuring that the high-priority packet is learned preferentially, and guaranteeing the high-priority service.

### BRIEF DESCRIPTION OF THE DRAWINGS

To illustrate the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and persons of ordinary skill in the art can derive other drawings from these accompanying drawings without creative efforts.
FIG. 1 is a flowchart of a method according to an embodiment of the present invention;
FIG. 2 is a schematic structural diagram of an apparatus according to an embodiment of the present invention;
FIG. 3 is a schematic structural diagram of a processing unit according to an embodiment of the present invention; and
FIG. 4 is a schematic architecture diagram of a system according to an embodiment of the present invention.

### DETAILED DESCRIPTION OF THE EMBODIMENTS

The following clearly and completely describes the technical solutions according to the embodiments of the present invention with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

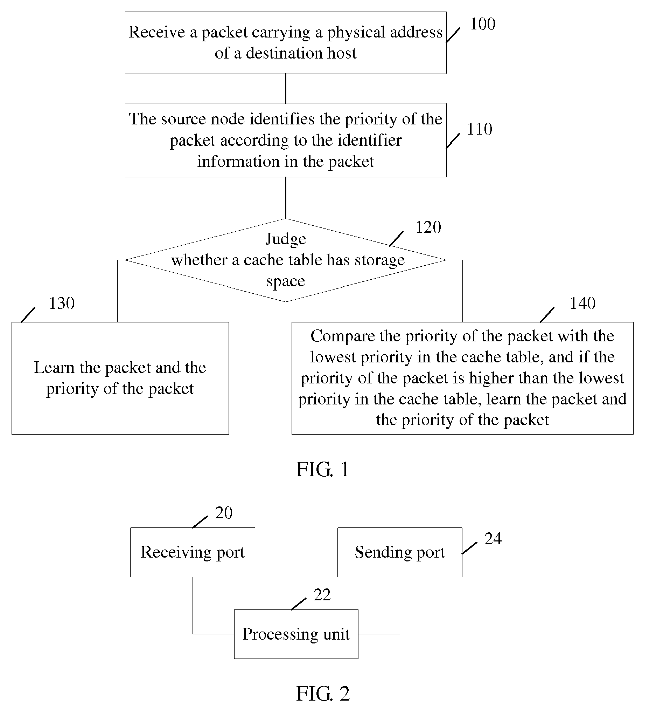

An embodiment of the present invention provides a packet learning method, as shown in FIG. 1, including:
Step 100: Receive a packet carrying a physical address of a destination host.

For the IPV4, the packet received by a source host may be an ARP response packet, while for the IPV6, the packet received by the source host may be a neighbor advertisement packet, and herein the physical address may be a MAC address of the destination host.

Before this step, the method further includes broadcasting or multicasting, by the source host, a discovery packet to a network. For the IPV4, the source host broadcasts an ARP request packet to the network; while for the IPV6, the source host multicasts a neighbor solicitation packet.

Step 110: The source node identifies a priority of the packet according to identifier information in the packet.

In the embodiment of the present invention, the packet sent by the destination host carries identifier information, and the source host may identify the priority of the packet according to the identifier information. The identifier information may be one or more of: information about a port of the source host receiving the packet (for example, one or more of a port identifier of the port, a subrack number, and a slot number), a virtual local area network (Virtual Local Area Network, VLAN) identifier carried in the packet, the MAC address carried in the packet, and identifier information of a local stream carrying the packet.

The source host calculates the priority of the packet according to the identifier information and a locally configured attribute weight value.

Step 120: Judge whether a cache table has storage space, and if so, perform step 130, or if not, perform step 140. The source host judges whether the local cache table still has storage space. For the IPV4, the local cache table is an ARP cache table; while for IPV6, the local cache table is a neighbor discovery (Neighbor Discovery, ND) neighbor cache table.

Step 130: Learn the packet and the priority of the packet.

The source host records the IP address of the destination host, the MAC address of the destination host, and the priority of the packet into the cache table.

The source host may further learn and record a number of the port receiving the packet, the VLAN ID carried in the packet, and a type of the port into the cache table. The specific structure of the cache table may be shown in Table 1 or Table 2.

**Table 1: Structure of the ARP cache table**

| IP Address | MAC Address | VLAN ID | Port | Priority | Type |
|---|---|---|---|---|---|
| 10.71.57.88 | 00e0-fc4c-4063 | 20 | 0/9/0 | 2 | Dynamic |
| 10.71.57.68 | 00e0-4c77-a27d | 20 | 0/9/0 | 3 | Dynamic |

**Table 2: ND neighbor cache table**

| | | |
|---|---|---|
| IPv6 address : | FE80::56E6:FCFF:FE6A:18D4 | Priority : 2 |
| Link-layer address : | 54e6-fc6a-18d4 | State : REACH |
| Interface : | vlanif100 | Age: 0 |
| VLAN: | 100 | Port : 0/1/1 |
| IPv6 address : | FE80::56E6:FCFF:FE6A:18D5 | Priority : 3 |
| Link-layer address : | 54e6-fc6a-18d5 | State : REACH |
| Interface : | vlanif100 | Age: 0 |
| VLAN: | 100 | Port : 0/1/1 |

Step 140: Compare the priority of the packet with a lowest priority in the cache table, and if the priority of the packet is higher than the lowest priority in the cache table, learn the packet and the priority of the packet.

Specifically, if the priority of the packet is higher than the lowest priority in the cache table, an entry corresponding to the lowest priority is replaced.

The method may further include: if the priority of the packet is lower than or equal to the lowest priority in the cache table, not learning, or learning after the cache table is aged.

The method provided by this embodiment is capable of identifying the priority of the response packet of the destination host, thereby learning the packet according to the priority, ensuring that the high-priority packet is learned preferentially, and guaranteeing the high-priority service.

An embodiment of the present invention provides a network device, as shown in FIG. 2, including:
a receiving port 20, configured to receive a packet, where the packet carries a physical address of a host in a network; and
a processing unit 22, configured to: identify a priority of the packet according to identifier information in the packet; judge whether a cache table has storage space; and if so, learn the packet and the priority of the packet; or if not, compare the priority of the packet with a lowest priority in a cache table, and if the priority of the packet is higher than the lowest priority in the cache table, learn and record the packet and the priority of the packet into a position corresponding to the lowest priority in the cache table.

The network device provided by this embodiment further includes a sending port 24, configured to broadcast or multicast a discovery packet to the network, where the discovery packet may be an ARP request packet or a neighbor solicitation packet. The discovery packet sent by the sending port 24 carries an IP address of a host in the network.

Specifically, the receiving port 20 may receive an ARP response packet or a neighbor advertisement packet sent by the host in the network, where the ARP response packet or neighbor advertisement packet carries the physical address of the host corresponding to the IP address, for example, a MAC address.

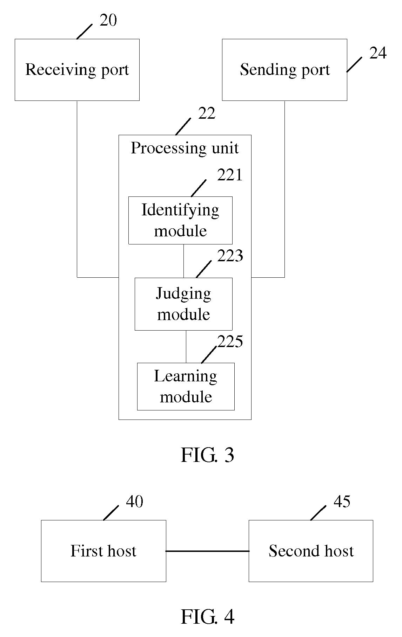

The processing unit 22 may be a central processing unit (Central Processing Unit, CPU) or a digital signal processing (Digital Signal Processing, DSP), and so on. As shown in FIG. 3, the processing unit 22 may further include:
an identifying module 221, configured to identify the priority of the packet according to the identifier information in the packet, where the identifier information may be one or more of: information about a port receiving the packet (for example, one or more of a port identifier of the port, a subrack number, and a slot number), a VLAN ID carried in the packet, the MAC address carried in the packet, and identifier information of a local stream carrying the packet;
a judging module 223, configured to judge whether a cache table has storage space; and a learning module 225, configured to learn the packet and the priority of the packet when the judging module 223 determines that the cache table has storage space; or compare the priority of the packet with the lowest priority in the cache table when the judging module 223 determines that the cache table has no storage space, and if the priority of the packet is higher than the lowest priority in the cache table, learn and record the packet and the priority of the packet into the position corresponding to the lowest priority in the cache table, which may specifically be replacing an entry corresponding to the lowest priority, and if the priority of the packet is lower than or equal to the lowest priority in the cache table, discard the packet, or learn the packet after the cache table is aged.

The network device in this embodiment may be a digital subscriber line access multiplexer (Digital Subscriber Line Access Multiplexer, DSLAM) or an optical line terminal (Optical Line Terminal, OLT) or other network devices.

The network device provided by this embodiment is capable of identifying the priority of the packet according to the identifier information in the packet after obtaining the packet of the host in the network, where the packet carries a physical address, and learning the packet according to the priority, which can ensure that the high-priority packet is learned preferentially, and guarantee the high-priority service.

An embodiment of the present invention provides a packet learning system, as shown in FIG. 4, including a first host 40 and a second host 45.

The first host 40 is configured to: receive a packet from the second host 45, where the packet carries a physical address of the second host 45; identify a priority of the packet according to identifier information in the packet; and judge whether a cache table has storage space; and if so, learn the packet and the priority of the packet; or if not, compare the priority of the packet with a lowest priority in the cache table, and if the priority of the packet is higher than the lowest priority in the cache table, learn and record the packet and the priority of the packet into a position corresponding to the lowest priority in the cache table.

The first host 40 is further configured to broadcast or multicast a discovery packet to the network, where the packet carries the logical identifier of the second host, for example, the IP address or a multicast address, so as to obtain the physical address of the second host 45.

The second host 45 is configured to receive the discovery packet of the first host 40, and send the physical address of the second host 45 to the first host 40 through a response packet after finding through comparison that its own IP address is consistent with the IP address in the discovery packet or that the last 24 bits of the local address are the same as the multicast address in the discovery packet.

With the packet learning system provided by this embodiment, the first host can identify the priority of the response packet, and learn the packet according to the priority, thereby ensuring that the high-priority packet is learned preferentially, and guaranteeing the high-priority service.

Persons of ordinary skill in the art should understand that all or a part of the steps of the methods in the preceding embodiments may be implemented by a program instructing relevant hardware. The program may be stored in a computer readable storage medium, such as a ROM/RAM, a magnetic disk, or an optical disk.

In conclusion, the above are merely specific embodiments of the present invention. However, the protection scope of the present invention is not limited thereto. Changes or replacements readily apparent to persons skilled in the art within the technical scope of the present invention should fall within the protection scope of the present invention. Therefore, the protection scope of the present invention is subject to the protection scope of the claims.

## Claims

1. A packet learning method, comprising:
receiving (100) a packet, wherein the packet carries an IP address and a media access control, MAC, address of a destination host in a network;
identifying (110) a priority of the packet according to one or more of: information about a port receiving the packet, information about a virtual local area network carried in the packet, the media access control address carried in the packet, and identifier information of a local stream carrying the packet; and
judging (120) whether a cache table has storage space; and if so, recording (130) the IP address of the destination host, the MAC address of the destination host, and the priority of the packet into the cache table; or if not, comparing (140) the priority of the packet with a lowest priority in the cache table, and if the priority of the packet is higher than the lowest priority in the cache table, recording the IP address of the destination host, the MAC address of the destination host, and the priority of the packet into a position corresponding to the lowest priority in the cache table.

2. The method according to claim 1, further comprising:
discarding the packet if the priority of the packet is lower than or equal to the lowest priority in the cache table.

3. The method according to claim 1 or 2, wherein the recording the IP address of the destination host, the media access control address of the destination host, and the priority of the packet into the cache table further comprises:
recording a number of the port receiving the packet, a virtual local area network identifier carried in the packet, and a type of the port into the cache table.

4. The method according to claim 1 or 2, wherein the packet comprises an address resolution protocol response packet or a neighbor advertisement packet.

5. A network device, comprising:
a receiving port (20), configured to receive a packet, wherein the packet carries an IP address and a media access control, MAC, address of a destination host in a network; and
a processing unit (22), configured to: identify a priority of the packet according to one or more of: information about a port receiving the packet, information about a virtual local area network carried in the packet, the media access control address carried in the packet, and identifier information of a local stream carrying the packet; judge whether a cache table has storage space; and if so, record the IP address of the destination host, the MAC address of the destination host, and the priority of the packet into the cache table; or if not, compare the priority of the packet with a lowest priority in the cache table, and if the priority of the packet is higher than the lowest priority in the cache table, record the IP address of the destination host, the MAC address of the destination host, and the priority of the packet into a position corresponding to the lowest priority in the cache table.

6. The device according to claim 5, wherein the processing unit (22) is further configured to discard the packet if the priority of the packet is lower than or equal to the lowest priority in the cache table.

7. The device according to claim 5 or 6, wherein the network device further comprises:
a sending port (24), configured to broadcast or multicast a discovery packet to the network, wherein the discovery packet carries the IP address of the destination host.

8. A packet learning system, comprising a first host (40) and a second host (45), wherein:
the first host (40) is configured to: receive a packet from the second host (45), wherein the packet carries an IP address and a media access control, MAC, address of the second host (45), and identify a priority of the packet according one or more of: information about a port receiving the packet, information about a virtual local area network carried in the packet, the media access control address carried in the packet, and identifier information of a local stream carrying the packet; judge whether a cache table has storage space; and if so, record the IP address of the second host (45), the MAC address of the second host (45), and the priority of the packet into the cache table; or if not, compare the priority of the packet with a lowest priority in the cache table, and if the priority ) of the packet is higher than the lowest priority in the cache table, record the IP address of the second host (45), the MAC address of the second host (45), and the priority of the packet into a position corresponding to the lowest priority in the cache table.

9. The system according to claim 8, wherein the first host (40) is further configured to broadcast or multicast a discovery packet to a network to obtain a physical address of the second host (45).

10. The system according to claim 8 or 9, wherein the first host (40) is further configured to record a number of a port receiving the packet, a virtual local area network identifier carried in the packet, and a type of the port into the cache table.

## Patentansprüche

1. Verfahren zum Lernen eines Datenpakets, umfassend:
Empfangen (100) eines Datenpakets, wobei das Datenpaket eine IP-Adresse und eine Medienzugangssteueradresse (Media Access Control address, MAC-Adresse) eines Ziel-Hosts in einem Netzwerk mitführt;
Identifizieren (110) einer Priorität des Datenpakets gemäß einer oder mehrerer aus: Informationen über einen Anschluss, der das Datenpaket empfängt, Informationen über ein virtuelles lokales Netzwerk, die in dem Datenpaket mitgeführt werden, der Medienzugangssteueradresse, die in dem Datenpaket mitgeführt wird, und Kennungsinformationen eines lokalen Datenstroms, der das Datenpaket mitführt; und Beurteilen (120), ob eine Cache-Tabelle einen Speicherplatz aufweist; und wenn dies der Fall ist, Aufzeichnen (130) der IP-Adresse des Ziel-Hosts, der MAC-Adresse des Ziel-Hosts und der Priorität des Datenpakets in der Cache-Tabelle; oder wenn dies nicht der Fall ist, Vergleichen (140) der Priorität des Datenpakets mit einer niedrigsten Priorität in der Cache-Tabelle, und wenn die Priorität des Datenpakets höher als die niedrigste Priorität in der Cache-Tabelle ist, Aufzeichnen der IP-Adresse des Ziel-Hosts, der MAC-Adresse des Ziel-Hosts und der Priorität des Datenpakets in einer Position, die der niedrigsten Priorität in der Cache-Tabelle entspricht.

2. Verfahren nach Anspruch 1, außerdem umfassend:
Entfernen des Datenpakets, wenn die Priorität des Datenpakets niedriger als oder gleich hoch wie die niedrigste Priorität in der Cache-Tabelle ist.

3. Verfahren nach Anspruch 1 oder 2, wobei das Aufzeichnen der IP-Adresse des Ziel-Hosts, der Medienzugangssteueradresse des Ziel-Hosts und der Priorität des Datenpakets in der Cache-Tabelle außerdem umfasst:
Aufzeichnen einer Nummer des Anschlusses, der das Datenpaket empfängt, einer virtuellen lokalen Netzwerkkennung, die in dem Datenpaket mitgeführt wird, und einer Art des Anschlusses in der Cache-Tabelle.

4. Verfahren nach Anspruch 1 oder 2, wobei das Datenpaket ein Antwortdatenpaket mit einem Adressenauflösungsprotokoll oder ein Datenpaket mit einer Nachbarankündigung umfasst.

5. Netzwerkvorrichtung umfassend:
einen Empfangsanschluss (20), der konfiguriert ist, ein Datenpaket zu empfangen, wobei das Datenpaket eine IP-Adresse und eine Medienzugangssteueradresse (Media Access Control address, MAC-Adresse) eines Ziel-Hosts in einem Netzwerk mitführt; und
eine Verarbeitungseinheit (22), die konfiguriert ist zum: Identifizieren einer Priorität des Datenpakets gemäß einer oder mehrerer aus: Informationen über einen Anschluss, der das Datenpaket empfängt, Informationen über ein virtuelles lokales Netzwerk, die in dem Datenpaket mitgeführt werden, der Medienzugangssteueradresse, die in dem Datenpaket mitgeführt wird, und Kennungsinformationen eines lokalen Datenstroms, der das Datenpaket mitführt; Beurteilen, ob eine Cache-Tabelle einen Speicherplatz aufweist; und wenn dies der Fall ist, Aufzeichnen der IP-Adresse des Ziel-Hosts, der MAC Adresse des Ziel-Hosts und der Priorität des Datenpakets in der Cache-Tabelle; oder wenn dies nicht der Fall ist, Vergleichen der Priorität des Datenpakets mit einer niedrigsten Priorität in der Cache-Tabelle, und wenn die Priorität des Datenpakets höher als die niedrigste Priorität in der Cache-Tabelle ist, Aufzeichnen der IP-Adresse des Ziel-Hosts, der MAC Adresse des Ziel-Hosts und der Priorität des Datenpakets in einer Position, die der niedrigsten Priorität in der Cache-Tabelle entspricht.

6. Vorrichtung nach Anspruch 5, wobei die Verarbeitungseinheit (22) außerdem konfiguriert ist, das Paket zu entfernen, wenn die Priorität des Datenpakets niedriger als oder gleich hoch wie die niedrigste Priorität in der Cache-Tabelle ist.

7. Vorrichtung nach Anspruch 5 oder 6, wobei die Netzwerkvorrichtung außerdem umfasst:
einen Sendeanschluss (24), der konfiguriert ist, ein Erkennungsdatenpaket per Broadcast- oder Multicast-Übertragung an das Netzwerk zu senden, wobei das Erkennungsdatenpaket die IP-Adresse des Ziel-Hosts mitführt.

8. System zum Lernen eines Datenpakets, das einen ersten Host (40) und einen zweiten Host (45) umfasst, wobei:
der erste Host (40) konfiguriert ist zum: Empfangen eines Datenpakets von dem zweiten Host (45), wobei das Datenpaket eine IP-Adresse und eine Medienzugangssteueradresse (Media Access Control address, MAC-Adresse) des zweiten Hosts (45) mitführt; und Identifizieren einer Priorität des Datenpakets gemäß einer oder mehrerer aus: Informationen über einen Anschluss, der das Datenpaket empfängt, Informationen über ein virtuelles lokales Netzwerk, die in dem Datenpaket mitgeführt werden, der Medienzugangssteueradresse, die in dem Datenpaket mitgeführt wird, und Kennungsinformationen eines lokalen Datenstroms, der das Datenpaket mitführt; Beurteilen, ob eine Cache-Tabelle einen Speicherplatz aufweist; und wenn dies der Fall ist, Aufzeichnen der IP-Adresse des zweiten Hosts (45), der MAC Adresse des zweiten Hosts (45) und der Priorität des Datenpakets in der Cache-Tabelle; oder wenn dies nicht der Fall ist, Vergleichen der Priorität des Datenpakets mit einer niedrigsten Priorität in der Cache-Tabelle, und wenn die Priorität des Datenpakets höher als die niedrigste Priorität in der Cache-Tabelle ist, Aufzeichnen der IP-Adresse des zweiten Hosts (45), der MAC Adresse des zweiten Hosts (45) und der Priorität des Datenpakets in einer Position, die der niedrigsten Priorität in der Cache-Tabelle entspricht.

9. System nach Anspruch 8, wobei der erste Host (40) außerdem konfiguriert ist, ein Erkennungsdatenpaket per Broadcast- oder Multicast-Übertragung an ein Netzwerk zu senden, um eine physische Adresse des zweiten Hosts (45) zu erhalten.

10. System nach Anspruch 8 oder 9, wobei der erste Host (40) außerdem konfiguriert ist, eine Nummer eines Anschlusses, der das Datenpaket empfängt, eine virtuelle lokale Netzwerkkennung, die in dem Datenpaket mitgeführt wird, und eine Art des Anschlusses in der Cache-Tabelle aufzuzeichnen.

## Revendications

1. Procédé d'apprentissage de paquet, comprenant les étapes suivantes :
recevoir (100) un paquet, le paquet contenant une adresse IP et une adresse de contrôle d'accès au support, MAC, d'un hôte de destination dans un réseau ;
identifier (110) une priorité du paquet selon un ou plusieurs éléments suivants : des informations concernant un port recevant le paquet, des informations concernant un réseau local virtuel contenues dans le paquet, l'adresse de contrôle d'accès au support contenue dans le paquet, et des informations d'identifiant d'un flux local contenant le paquet ; et
juger (120) si une table de mémoire cache a un espace de stockage ; et si tel est le cas, enregistrer (130) l'adresse IP de l'hôte de destination, l'adresse MAC de l'hôte de destination, et la priorité du paquet dans la table de mémoire cache ; ou si tel n'est pas le cas, comparer (140) la priorité du paquet avec une priorité inférieure dans la table de mémoire cache, et si la priorité du paquet est plus élevée que la priorité inférieure dans la table de mémoire cache, enregistrer l'adresse IP de l'hôte de destination, l'adresse MAC de l'hôte de destination, et la priorité du paquet dans une position correspondant à la priorité inférieure dans la table de mémoire cache.

2. Procédé selon la revendication 1, comprenant en outre l'étape suivante :
rejeter le paquet si la priorité du paquet est moins élevée ou égale à la priorité inférieure dans la table de mémoire cache.

3. Procédé selon la revendication 1 ou 2, dans lequel l'étape consistant à enregistrer l'adresse IP de l'hôte de destination, l'adresse de contrôle d'accès au support de l'hôte de destination, et la priorité du paquet dans la table de mémoire cache comprend en outre :
enregistrer un numéro du port recevant le paquet, un identifiant de réseau local virtuel contenu dans le paquet, et un type du port dans la table de mémoire cache.

4. Procédé selon la revendication 1 ou 2, dans lequel le paquet comprend un paquet de réponse de protocole de résolution d'adresse ou un paquet de notification de voisin.

5. Dispositif de réseau, comprenant :
un port de réception (20), configuré pour recevoir un paquet, le paquet contenant une adresse IP et une adresse de contrôle d'accès au support, MAC, d'un hôte de destination dans un réseau ; et
une unité de traitement (22), configurée pour : identifier une priorité du paquet selon un ou plusieurs éléments suivants : des informations concernant un port recevant le paquet, des informations concernant un réseau local virtuel contenues dans le paquet, l'adresse de contrôle d'accès au support contenue dans le paquet, et des informations d'identifiant d'un flux local contenant le paquet ; juger si une table de mémoire cache a un espace de stockage ; et si tel est le cas, enregistrer l'adresse IP de l'hôte de destination, l'adresse MAC de l'hôte de destination, et la priorité du paquet dans la table de mémoire cache ; ou si tel n'est pas le cas, comparer la priorité du paquet avec une priorité inférieure dans la table de mémoire cache, et si la priorité du paquet est plus élevée que la priorité inférieure dans la table de mémoire cache, enregistrer l'adresse IP de l'hôte de destination, l'adresse MAC de l'hôte de destination, et la priorité du paquet dans une position correspondant à la priorité inférieure dans la table de mémoire cache.

6. Dispositif selon la revendication 5, dans lequel l'unité de traitement (22) est en outre configurée pour rejeter le paquet si la priorité du paquet est moins élevée ou égale à la priorité inférieure dans la table de mémoire cache.

7. Dispositif selon la revendication 5 ou 6, dans lequel le dispositif de réseau comprend en outre :
un port d'envoi (24), configuré pour diffuser ou transmettre en mode de multidiffusion un paquet de découverte au réseau, le paquet de découverte contenant l'adresse IP de l'hôte de destination.

8. Système d'apprentissage de paquet, comprenant un premier hôte (40) et un deuxième hôte (45), dans lequel :
le premier hôte (40) est configuré pour : recevoir un paquet à partir du deuxième hôte (45), le paquet contenant une adresse IP et une adresse de contrôle d'accès au support, MAC, du deuxième hôte (45), et identifier une priorité du paquet selon un ou plusieurs éléments suivants : des informations concernant un port recevant le paquet, des informations concernant un réseau local virtuel contenues dans le paquet, l'adresse de contrôle d'accès au support contenue dans le paquet, et des informations d'identifiant d'un flux local contenant le paquet ; juger si une table de mémoire cache a un espace de stockage ; et si tel est le cas, enregistrer l'adresse IP du deuxième hôte (45), l'adresse MAC du deuxième hôte (45), et la priorité du paquet dans la table de mémoire cache ; ou si tel n'est pas le cas, comparer la priorité du paquet avec une priorité inférieure dans la table de mémoire cache, et si la priorité du paquet est plus élevée que la priorité inférieure dans la table de mémoire cache, enregistrer l'adresse IP du deuxième hôte (45), l'adresse MAC du deuxième hôte (45), et la priorité du paquet dans une position correspondant à la priorité inférieure dans la table de mémoire cache.

9. Système selon la revendication 8, dans lequel le premier hôte (40) est en outre configuré pour diffuser ou transmettre en mode de multidiffusion un paquet de découverte à un réseau pour obtenir une adresse physique du deuxième hôte (45).

10. Système selon la revendication 8 ou 9, dans lequel le premier hôte (40) est en outre configuré pour enregistrer un numéro d'un port recevant le paquet, un identifiant de réseau local virtuel contenu dans le paquet, et un type du port dans la table de mémoire cache.
